# EUROPEAN PATENT APPLICATION

(11) **EP 3 522 005 A1**
(43) Date of publication of application: **07.08.2019**
(21) Application number: 17924930.5
(22) Date of filing: 19.10.2017
(51) Int. Cl.: G06F 8/61

(54) **METHOD AND APPARATUS FOR CONSTRUCTING MIRROR IMAGE**

(30) Priority: 18.09.2017 CN 201710841510
(71) Applicant: Wangsu Science & Technology Co., Ltd., Shanghai 200030 (CN)
(72) Inventor: HU, Weihuang, Shanghai 200030 (CN)
(74) Representative: Hanna Moore + Curley
(86) International application number: PCT/CN2017/106896
(87) International publication number: WO 2019/051919

(57) **Abstract**

A method for building images, includes: acquiring a template file to which an application type of a target application corresponds, where the template file includes platform environment configuration information and at least one variable; acquiring to-be-input parameters to which the at least one variable corresponds and to which the target application matches; based on the platform environment configuration information, the at least one variable, and the to-be-input parameters to which the at least one variable corresponds and to which the target application matches, executing an image-building command to obtain an image for running the target application.

## Description

### FIELD OF THE DISCLOSURE

The present disclosure relates to the technical field of docker and, more particularly, relates to a method and a device for building images.

### BACKGROUND

In current cloud computing architecture, especially the Platform as a service (PaaS) architecture, the docker technique is applied as a carrier to run various types of applications for application scenarios such as operation automation, DevOps, and microservices architecture. In these application scenarios, the building technique of docker images is an indispensable part.

In the existing building process of docker images, developers or operators need to design and run images of a certain type of application programs based on actual demands. Thus, before build, the developers or operators have to learn the building technique of docker images. Because images for running different application programs are different, the building processes of different images are different. Further, because of the configuration issue of platform compatibility during the process in which the application components are migrated to the PaaS platform, the developers or operators may not be able to build relatively simple and effective images that can run in a normal manner.

Therefore, a method for building images is desired to realize automated building of images, thereby saving the learning cost of the developers or operators.

### BRIEF SUMMARY OF THE DISCLOSURE

Embodiments of the present disclosure provide a method and a device for building images, thereby implementing automated building of an image to save the learning cost of developers or operators.

Embodiments of the present disclosure provide a method for building images, including: acquiring a template file to which an application type of a target application corresponds, where the template file includes platform environment configuration information and at least one variable; acquiring to-be-input parameters to which the at least one variable corresponds and to which the target application matches; based on the platform environment configuration information, the at least one variable, and the to-be-input parameters to which the at least one variable corresponds and to which the target application matches, executing an image-building command to obtain an image for running the target application.

Optionally, the based on the platform environment configuration information, the at least one variable, and the to-be-input parameters to which the at least one variable corresponds and to which the target application matches, executing an image-building command to obtain an image for running the target application, includes: based on the template file to which the application type of the target application corresponds, determining a target location of each variable in the template file; filling the to-be-input parameters to which the at least one variable corresponds and to which the target application matches in corresponding target locations, and generating an image-building script based on the filled template file; executing an image-building command based on the image-building script, thereby obtaining the image for running the target application.

Optionally, the acquiring to-be-input parameters to which the at least one variable corresponds and to which the target application matches, includes: displaying the at least one variable on a Web page or in an attribute file of the target application; if data input is detected on the Web page or in the attribute file of the target application, acquiring at least one key-value pair formed by each variable and input data corresponding to the each variable, where in each key-value pair, the keyword is a variable, and the value is a to-be-input parameter to which the variable corresponds and to which the target application matches.

Optionally, the template file further includes a preset structural body to which the at least one variable corresponds; and before filling the to-be-input parameters to which the at least one variable corresponds and to which the target application matches in corresponding target locations, the method further includes: parsing the acquired at least one key-value pair into a to-be-matched structural body, where the to-be-matched structural body has a consistent format as the preset structural body.

Optionally, the determining a target location of each variable in the template file; filling the to-be-input parameters to which the at least one variable corresponds and to which the target application matches in corresponding target locations, and generating an image-building script based on the filled template file, includes: matching each variable in the to-be-matched structural body with each variable in the preset structural body; if a variable in the to-be-matched structural body is determined to be consistent with a variable in the preset structural body, determining a location to which the variable in the preset structural body corresponds as the target location; deleting the variable in the target location, and filling the to-be-input parameter to which the variable in the to-be-matched structural body corresponds and to which the target application matches in the target location, thereby obtaining the image-building script.

Optionally, before based on the platform environment configuration information, the at least one variable, and the to-be-input parameters to which the at least one variable corresponds and to which the target application matches, executing an image-building command to obtain an image for running the target application, the method further includes: determining a name of the image for running the target application based on the to-be-input parameters to which the target application matches.

Embodiments of the present disclosure provide a device for building images, including: an acquisition unit, configured for acquiring a template file to which an application type of a target application corresponds, where the template file includes platform environment configuration information and at least one variable; acquiring to-be-input parameters to which the at least one variable corresponds and to which the target application matches; an image-building unit, configured for, based on the platform environment configuration information, the at least one variable, and the to-be-input parameters to which the at least one variable corresponds and to which the target application matches, executing an image-building command to obtain an image for running the target application.

Optionally, the image-building unit is configured for: based on the template file to which the application type of the target application corresponds, determining a target location of each variable in the template file; filling the to-be-input parameters to which the at least one variable corresponds and to which the target application matches in corresponding target locations, and generating an image-building script based on the filled template file; and executing an image-building command based on the image-building script, thereby obtaining the image for running the target application.

Optionally, the acquisition unit is configured for: displaying the at least one variable on a Web page, or in an attribute file of the target application; if data input is detected on the Web page or in the attribute file of the target application, acquiring at least one key-value pair formed by each variable and input data corresponding to the each variable, where in each key-value pair, the keyword is a variable, and the value is a to-be-input parameter to which the variable corresponds and to which the target application matches.

Optionally, the template file further includes a preset structural body to which the at least one variable corresponds; and the device further includes a parsing unit, configured for, parsing the acquired at least one key-value pair into a to-be-matched structural body, where the to-be-matched structural body has a consistent format as the preset structural body.

Optionally, the image-building unit is further configured for: matching each variable in the to-be-matched structural body with each variable in the preset structural body; if a variable in the to-be-matched structural body is determined to be consistent with a variable in the preset structural body, determining a location to which the variable in the preset structural body corresponds as the target location; deleting the variable in the target location, and filling the to-be-input parameter to which the variable in the to-be-matched structural body corresponds and to which the target application matches in the target location, thereby obtaining the image-building script.

Optionally, the image-building unit is further configured for: determining a name of the image for running the target application based on the to-be-input parameters to which the target application matches.

In embodiments of the present disclosure, a template file to which the application type of a target application corresponds is acquired, where the template file includes the configuration information of the platform environment and at least one variable; to-be-input parameters to which the at least one variable corresponds and to which the target application matches are acquired; based on the platform environment configuration information, the at least one variable, and the to-be-input parameters to which the at least one variable corresponds and to which the target application matches, an image-building command is executed to obtain an image for running the target application. As such, the developers or operators only need to know the to-be-input parameters to which the at least one variable corresponds and to which the target application matches, to realize automated building of an image for running a target application. That is, the developers or operators no longer need to learn the image-building technologies, and the learning cost can thus be reduced.

### BRIEF DESCRIPTION OF THE DRAWINGS

To more clearly illustrate technical solutions of the present disclosure, accompanying drawings used in descriptions of embodiments are briefly introduced hereinbelow.
FIG. 1 illustrates a flow chart of a method for building images according to embodiments of the present disclosure;
FIG. 2 illustrates a schematic view of a directory structure including an attribute file according to embodiments of the present disclosure;
FIG. 3 illustrates a flow chart of another method for building images according to embodiments of the present disclosure; and
FIG. 4 illustrates a structural schematic view of a device for building images according to embodiments of the present disclosure.

### DETAILED DESCRIPTION

To make the objective, technical solutions and advantages of the present disclosure clearer, embodiments of the present disclosure are described in more details with reference to the accompanying drawings. It should be understood that, the embodiments described herein are merely used to illustrate the present disclosure, but are not intended to limit the present disclosure.

The disclosed method for building images is applicable to all scenarios that build images through an image-building script, and the primary types of images include but are not limited to Docker images. Because images for different types of application programs are different, the template files for building different images may be also different. To prevent compiling all information for building an image every time an image is being built, embodiments of the present disclosure select a preconfigured template file to which the application type of the target application corresponds, acquire to-be-input parameters to which variables correspond, and executes an image-building command, thereby simplifying the image building process.

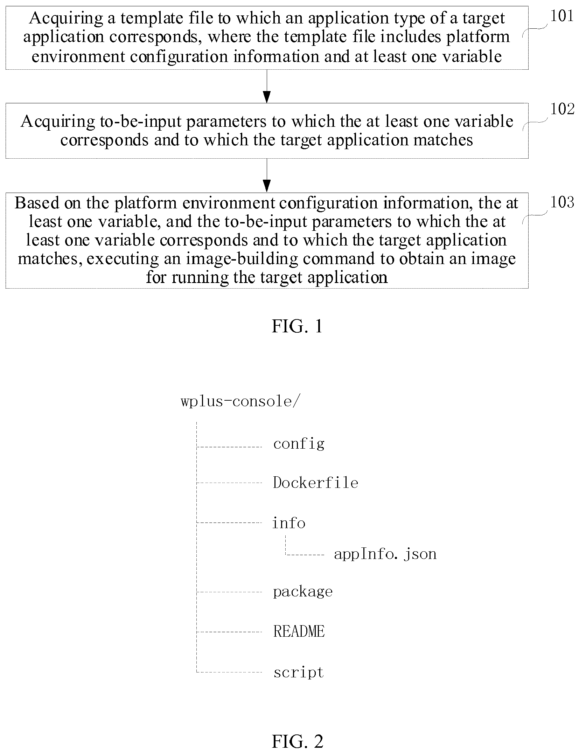

FIG. 1 illustrates a flow chart of a method for building images according to embodiments of the present disclosure. As shown in FIG. 1, the disclosed method for building images includes following steps:
Step 101: acquiring a template file to which an application type of a target application corresponds, where the template file includes platform environment configuration information and at least one variable;
Step 102: acquiring to-be-input parameters to which the at least one variable corresponds and to which the target application matches;
Step 103: based on the platform environment configuration information, the at least one variable, and the to-be-input parameters to which the at least one variable corresponds and to which the target application matches, executing an image-building command to obtain an image for running the target application.

In embodiments of the present disclosure, the template file to which the application type of the target application corresponds is acquired; the template file includes the configuration information of the platform environment and at least one variable; to-be-input parameters to which the at least one variable corresponds and to which the target application matches are acquired; based on the platform environment configuration information, the at least one variable, and the to-be-input parameters to which the at least one variable corresponds and to which the target application matches, the image-building command is executed to obtain an image for running the target application. As such, the developers or operators only need to know the to-be-input parameters to which the at least one variable corresponds and to which the target application matches, to realize automated building of an image for running a target application. The developers or operators no longer need to learn the image-building technologies, such that the learning cost can be reduced.

According to the present disclosure, there are various approaches of acquiring the template file to which the application type of the target application corresponds. One optional approach is to configure a universal template file that builds an image for running various types of applications, and the various types of applications can include but are not limited to: Java applications, PHP applications, and Go/C/C++ applications. Another optional approach is to configure multiple template files of general application types. That is, for each type of application, a template file may be prepared to build an image for running this type of application. For example, for the type of Java application, a template file suitable for the type of Java application may be prepared.

In embodiments of the present disclosure, each template file includes platform environment configuration information and at least one variable for running a target application. For example, the target application may be Java application 1, which belongs to the Java application type. The same as the Java application 1, other applications belonging to the same application type may include Java application 2 and Java application 3. When building an image for running the Java application 1, the Java application 2, and the Java application 3, the same template file of a Java application type may be applied.

In the aforementioned embodiments, the platform environment configuration information is a configuration item related to the platform, such as configuration content regarding compatibility requirements of the platform and the specialized requirements of the platform. Optionally, applications that have the same application type as the target application have the same platform environment configuration information. That is, the Java application 1, the Java application 2, and the Java application 3 have the same platform environment configuration information, such that the platform environment configuration information does not need to be configured separately. Thus, the platform environment configuration information may be pre-configured in the template file, and when building the image of the target application, the platform environment configuration information does not need to be exposed to the developers or operators. Thus, the process of building images can be simplified, which reduces the working load of the developers or operators.

In embodiments of the present disclosure, there may be various types of languages for use in a template file. Given the Go language as an example, the present disclosure provides an example of a template file hereinafter that includes variables.

### Example 1:

```
    FROM {{.BaseImage}}
    MAINTAINER {{.UserName}}
    RUN {{.LinuxBaseCmd}}
    COPY package/* /{{.AppName}}/
    COPY script/run.sh {{.CmdDir}}
    RUN rpm -ivh /{{.AppName}}/*.rpm && rm -r /{{.AppName}}/*.rpm
    COPY config/* {{.ConfigDir}}
    RUN rm -fr {{.LogDir}}
    RUN In -sf /wae/log {{.LogDir}}
    WORKDIR {{.Workdir}}
    CMD ["{{.CmdDir} }run.sh"]
```

In the above example 1, the content in {{. }} is the at least one variable, including BaseImage, UserName, and LinuxBaseCmd, etc.

Based on Step 102, the to-be-input parameters of each application that has an application type consistent with the target application may be different. For example, when building an image for running the Java application 1, to-be-input parameters that match the Java application 1 need to be acquired; and when building an image for running the Java application 2, to-be-input parameters that match the Java application 2 need to be acquired. When building the image for running the target application, the at least one variable in the template file needs to be exposed to the developers or operators, and the developers or operators may input a to-be-input parameter to which each variable corresponds and to which the target application matches.

The present disclosure provides an approach to acquire to-be-input parameters to which at least one variable corresponds and to which the target application matches. The present disclosure further displays the at least one variable on a Web page or in an attribute file of the target application. If data input is detected on the Web page or in the attribute file of the target application, at least one key-value pair formed by each variable and input data corresponding to the each variable is acquired, where in each key-value pair, the keyword is a variable, and the value is a to-be-input parameter to which the variable corresponds and to which the target application matches.

Optionally, attribute files include but are not limited to files such as a JSON file, an XML file, and a YAML file. To display at least variable in the attribute file, given a JSON file as an example, the JSON file may be looked up in a directory structure displayed by various files. FIG. 2 illustrates a schematic view of a directory structure including an attribute file according to embodiments of the present disclosure. As shown in FIG. 2, among sub-directories of a parent-directory wplus-console in a directory structure, a sub-directory info may be found, and further a JSON file applnfo.json of the sub-directory info may be found, where the JSON file includes at least one variable.

An example that displays variables on the Web page or in an attribute file is provided hereinafter.

### Example 2

```
   {"BaseImage": ,
       "Namespace": ,
       "AppName": ,
       "Version": ,
       "UserName": ,
       "LogDir": ,
       "CmdDir": ,
       "ConfigDir": ,
       "Workdir": ,
       "LinuxBaseCmd":
  }
```

In the above example 2, each row includes one variable. For example, the first row includes variable Baselmage, and the second row includes variable Namespace.

Based on example 2, a developer or an operator may fill in to-be-input parameters to which the at least one variable corresponds and to which the target application matches on the Web page or in the attribute file. Further, key-value pairs that use the variables as keywords and use the to-be-input parameters to which the variables correspond and to which the target application matches as the values may be acquired.

Based on the variables displayed in example 2, an example showing at least one key-value pair is provided hereinafter.

### Example 3

```
   {"BaseImage": "registry.wae.haplat.net/base/java:7",
      "Namespace": "wplus",
      "AppName": "wplus-console",
      "Version": "1.4.1-1",
      "UserName": "huwh",
      "LogDir": "/usr/local/wsop/console/logs",
      "CmdDir": "/usr/local/bin/",
      "ConfigDir": "/usr/local/wsop/console/conf/",
      "Workdir": "/usr/local/wsop/console/",
   } "LinuxBaseCmd":"yum install -y file"
```

In the above example 3, each row includes a key-value pair. For example, in the first row, the keyword is variable Baselmage, and its value is the to-be-input parameter: registry.wae.haplat.net/base/java:7, to which the target application matches. In the second row, the keyword is the variable Namespace, and its value is the to-be-input parameter wplus to which the target application matches. The present disclosure exposes at least one variable to the developers or operators, and the developers or operators only need to input to-be-input parameters to which the at least one variable corresponds and to which the target application matches. That is, the developers or operators no longer need to compile configuration information related to the platform, and no longer need to pay attention to the configuration compatibility issue of different platforms. Thus, a simple, high-efficient, and automated building process of an image is realized.

In embodiments of the present disclosure, to build images, an image-building script needs to be created, but the developers and operators do not need to learn the process of creating an image-building script. Based on the platform environment configuration information, the at least one variable, and the to-be-input parameters to which the at least one variable corresponds and to which the target application matches, the image for running the target application may be built automatically.

The present disclosure further describes processes of automatically creating an image-building script and building an image in detail hereinafter.

Based on step 102, after acquiring the to-be-input parameters to which the target application matches, based on the platform environment configuration information, the at least one variable, and the to-be-input parameters to which the at least one variable corresponds and to which the target application matches, executing an image-building command to obtain an image for running the target application, includes: based on the template file to which the application type of the target application corresponds, determining a target location of each variable in the template file; filling the to-be-input parameters to which the at least one variable corresponds and to which the target application matches in corresponding target locations, and generating an image-building script based on the filled template file; and executing an image-building command based on the image-building script, thereby obtaining the image for running the target application.

An example is given with reference to example 1 and example 3. The template file in example 1 includes at least one command that includes a variable, such as FROM {{.BaseImage}}, and the command is to, based on a basic image, build an image for running the target application. First, the location of the variable BaseImage in the template file is determined as the target location. Further, the to-be-input parameter to which the variable BaseImage corresponds, i.e., registry.wae.haplat.net/base/java:7, is acquired. This to-be-input parameter is filled in the target location of the template file in example 1 to which the variable BaseImage corresponds, and thus an image-building script is acquired. Accordingly, the process of building images is simplified, and automated building of an image is realized.

In embodiments of the present disclosure, the template file further includes a preset structural body to which the at least one variable corresponds; and before filling the to-be-input parameters to which the at least one variable corresponds and to which the target application matches in corresponding target locations, the method further includes: parsing the acquired at least one key-value pair into a to-be-matched structural body, where the to-be-matched structural body has a consistent format as the preset structural body. For example, when the user inputs the to-be-input parameters to which at least one variable corresponds in the file AppInfo.json, at least one key-value pair acquired from the file AppInfo.json may be parsed into a to-be-matched structural body through the function json.Unmarshal. Further, the to-be-matched structural body may be parsed to generate an image-building script through a template-processing approach. The template processing approach may be realized through a template-processing function of the text/template packet or the http/template packet.

Embodiments of the present disclosure provide an approach for determining a target location of each variable in the template file and filling a to-be-input parameter to which each variable corresponds and to which the target application matches in the target location to obtain an image-building script. The present disclosure may match each variable in the to-be-matched structural body with each variable in the preset structural body. If a variable in the to-be-matched structural body is determined to be consistent with a variable in the preset structural body, a location to which the variable in the preset structural body corresponds is determined as the target location. Further, the variable in the target location is deleted, and the to-be-input parameter to which the variable in the to-be-matched structural body corresponds and to which the target application matches is filled in the target location, thereby obtaining the image-building script.

In embodiments of the present disclosure, the image-building script is not limited to the file Dockerfile, but may be any image-building file. An example of image-building scripts obtained based on the key-value pairs and the template file in example 3 is provided hereinafter.

### Example 4

```
   FROM registry.wae.haplat.net/base/java:7
   MAINTAINER huwh
   RUN yum install -y file
   COPY package/* /wplus-console/
   COPY script/run.sh /usr/local/bin/
   RUN rpm -ivh /wplus-console/*.rpm && rm -r /wplus-console/*.rpm
   COPY config/* /usr/local/wsop/console/conf/
   RUN rm -fr /usr/local/wsop/console/logs
   RUN In -sf /wae/log /usr/local/wsop/console/logs
   WORKDIR /usr/local/wsop/console/
   CMD ["/usr/local/bin/run.sh"]
```

Based on the image-building scripts in example 4, the image-building command may be executed to realize one-click, automated building of an image. In embodiments of the present disclosure, before executing an image-building command to obtain an image for running the target application, the method further includes: determining a name of the image for running the target application based on the to-be-input parameters to which the target application matches. One implementation is that, the name of an image may be determined based on any number of the to-be-input parameters to which the target application matches. For example, the name of the image may be determined by the to-be-input parameters that correspond to the following variables:

```
   <docker-registry-url>/<namespace>/<app-name>:<version>;
```

Where the variable docker-registry-url is an image registry address, which often refers to a domain name, and the to-be-input parameter to which the variable docker-registry-url corresponds may be, for example, registry.wae.haplat.net; the variable namespace is a name space, and the to-be-input parameter to which the variable namespace corresponds may be, for example, wplus; the variable app-name is an application name, and the to-be-input parameter to which the variable app-name corresponds may be, for example, wplus-console; the variable version is an application version No., and the to-be-input parameter to which the variable version corresponds may be, for example, 1.4.1 -1. Thus, the name of the image in this example may be: registry.wae.haplat.net/wplus/wplus-console:1.4.1-1./.

After the image is generated, the image may be pushed to the image repository for subsequent authorization and application deployment. The related command needed herein may be as follows:
Inspect image: docker images
Push image: docker push registry.wae.haplat.net/wplus/wplus-console:1.4.1-1.

To more clearly introduce the aforementioned method flow chart, embodiments of the present disclosure further provide an example.

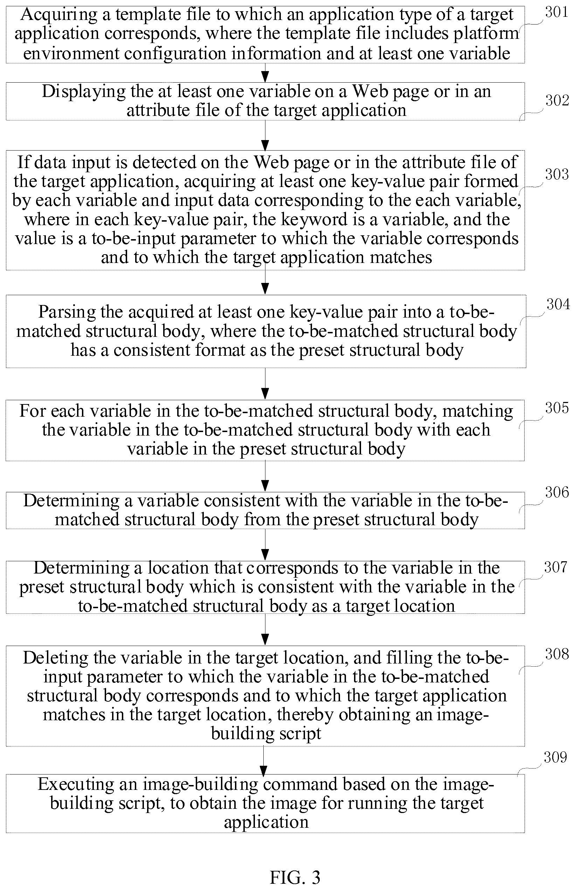

FIG. 3 illustrates a flow chart of a method for building images according to embodiments of the present disclosure. As shown in FIG. 3, the present disclosure provides a version file upgrading method, and the method includes following steps:
Step 301: acquiring a template file to which an application type of a target application corresponds, where the template file includes platform environment configuration information and at least one variable;
Step 302: displaying the at least one variable on a Web page or in an attribute file of the target application.
Step 303: if data input is detected on the Web page or in the attribute file of the target application, acquiring at least one key-value pair formed by each variable and input data corresponding to the each variable, where in each key-value pair, the keyword is a variable, and the value is a to-be-input parameter to which the variable corresponds and to which the target application matches;
Step 304: parsing the acquired at least one key-value pair into a to-be-matched structural body, where the to-be-matched structural body has a consistent format as the preset structural body;
Step 305: for each variable in the to-be-matched structural body, matching the variable in the to-be-matched structural body with each variable in the preset structural body;
Step 306: determining a variable consistent with the variable in the to-be-matched structural body from the preset structural body;
Step 307: determining a location that corresponds to the variable in the preset structural body which is consistent with the variable in the to-be-matched structural body as a target location;
Step 308: deleting the variable in the target location, and filling the to-be-input parameter to which the variable in the to-be-matched structural body corresponds and to which the target application matches in the target location, thereby obtaining an image-building script;
Step 309: executing an image-building command based on the image-building script, to obtain the image for running the target application.

From aforementioned embodiments, it is found that in embodiments of the present disclosure, a template file to which the application type of a target application corresponds is acquired, where the template file includes the configuration information of the platform environment and at least one variable; to-be-input parameters to which the at least one variable corresponds and to which the target application matches are acquired; based on the platform environment configuration information, the at least one variable, and the to-be-input parameters to which the at least one variable corresponds and to which the target application matches, an image-building command is executed to obtain an image for running the target application. As such, the developers or operators only need to know the to-be-input parameters to which the at least one variable corresponds and to which the target application matches, to realize automated building of an image for running a target application. That is, the developers or operators no longer need to learn the image-building technologies, and the learning cost can thus be reduced.

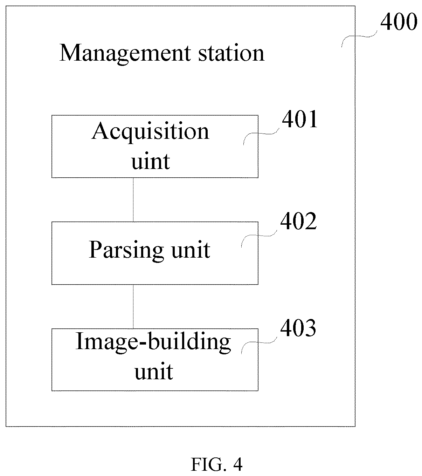

Based on the aforementioned embodiments and the same idea, FIG. 4 illustrates a structural schematic view of a device for building images according to embodiments of the present disclosure. As shown in FIG. 4, the device 400 for building images may correspond to a device for building images in the aforementioned methods. Such device for building images may implement any one or multiple steps in the method illustrated in FIG. 1 that are executable by a device for building images. The device 400 for building images may include an acquisition unit 401, and an image-building unit 403. Further, the device 400 may include a parsing unit 402.

The acquisition unit 401 is configured for acquiring a template file to which an application type of a target application corresponds, and acquiring to-be-input parameters to which the at least one variable corresponds and to which the target application matches.

The image-building unit 403 is configured for, based on the platform environment configuration information, the at least one variable, and the to-be-input parameters to which the at least one variable corresponds and to which the target application matches, executing an image-building command to obtain an image for running the target application.

In embodiments of the present disclosure, the developers or operators only need to know the to-be-input parameters to which the at least one variable corresponds and to which the target application matches, to realize automated building of an image for running a target application. The developers or operators no longer need to learn the image-building technologies, such that the learning cost can be reduced.

Optionally, the image-building unit 403 is configured for: based on the template file to which the application type of the target application corresponds, determining a target location of each variable in the template file; filling a to-be-input parameter to which each variable corresponds and to which the target application matches in the target location, and generating an image-building script based on the filled template file; and executing an image-building command based on the image-building script, thereby obtaining the image for running the target application.

Optionally, the acquisition unit 401 is configured for: displaying the at least one variable on a Web page or in an attribute file of the target application; if data input is detected on the Web page or in the attribute file of the target application, acquiring at least one key-value pair formed by the each variable and input data corresponding to the each variable, where in each key-value pair, the keyword is a variable, and the value is a to-be-input parameter to which the variable corresponds and to which the target application matches.

Optionally, the template file further includes a preset structural body to which the at least one variable corresponds. The device further includes a parsing unit 402, configured for: parsing the acquired at least one key-value pair into a to-be-matched structural body, where the to-be-matched structural body has a consistent format as the preset structural body. The image-building unit 403 is configured for: matching each variable in the to-be-matched structural body with each variable in the preset structural body; if a variable in the to-be-matched structural body is determined to be consistent with a variable in the preset structural body, determining a location to which the variable in the preset structural body corresponds as the target location; deleting the variable in the target location, and filling the to-be-input parameter to which the variable in the to-be-matched structural body corresponds and to which the target application matches in the target location, thereby obtaining the image-building script.

Optionally, the image-building unit 403 is further configured for: determining a name of an image for running the target application based on the to-be-input parameters to which the target application matches.

The concepts, illustrations, detailed descriptions, and other steps of the image-building device in technical solutions provided by embodiments of the present disclosure may refer to descriptions in the aforementioned method or other embodiments, and repeated descriptions are not provided herein.

It should be noted that, division of modules in embodiments of the present disclosure is for illustrative purposes, which is merely logic function division, and there may be other division manners in actual implementation. In the disclosed embodiments, various functional modules may be integrated into one processing module, each module may exist physically and individually, or two or more modules may be integrated into one module. The aforementioned integrated module may be embodied in the form of hardware, or may be embodied in the form of software functional module.

The aforementioned embodiments may be entirely or partially implemented through software, hardware, firmware, or any combination thereof. When implemented in software, the aforementioned embodiments may be entirely or partially implemented in the form of a computer program product. The computer program product may include one or more computer instructions. When loading and executing the computer program instructions at the computer, entire or partial processes or functions may be implemented according to embodiments of the present disclosure. The computer may be a general-purpose computer, a specialized computer, a computer network, or other programmable devices. The computer instructions may be stored in a computer-readable storage medium, or may be transmitted from one computer-readable storage medium to another computer-readable storage medium. For example, the computer instructions may be transmitted from a website station, a computer, a server, or a data center to another website station, another computer, another server, or another data center through a wired manner (e.g., coaxial cable, optical fiber, digital subscriber line (DSL)) or a wireless manner (e.g., infrared, wireless, microwave). The computer-readable storage medium may be any available medium accessible by the computer, or a data storage device such as a server integrated by one or more available media or a data center. The available medium may be a magnetic medium (e.g., floppy drive, hard disk, and magnetic tape), an optical medium (e.g., DVD), or a semiconductor medium (e.g., solid state disk (SSD)), etc.

Those skilled in the relevant art shall understand that embodiments of the present disclosure may be provided as a method, a system, or a computer program product. Thus, embodiments of the present disclosure may be embodied in the form of entire hardware embodiments, entire software embodiments, or embodiments combining hardware and software aspects. Further, embodiments of the present disclosure may be implemented in the form of one or more computer program products that run on a computer-readable storage medium (including but not limited to magnetic storage device, CD-ROM, and optical memory) that includes computer-readable program codes.

Embodiments of the present disclosure are described with reference to flowchart and/or block diagram of the method, device (system) and computer program product according to embodiments of the present disclosure. It shall be understood that the computer program instructions may realize each process and/or block in the flowchart and/or block diagram, or combinations of processes and/or blocks in the flowchart and/or block diagram. These computer program instructions may be provided to a processor of the general-purpose computer, the specialized computer, the embedded processor, or other programmable data processing devices to generate a machine, such that through the instructions executed by the processor of the computer or other programmable data processing devices, a device for implementing functions designated in one or more processes in the flowchart and/or one or more blocks in the block diagram is implemented.

These computer program instructions may be also stored in a computer-readable memory that guides the computer or other programmable data processing devices to work in a specified manner, such that instructions stored in the computer-readable memory generate a manufacturer of the disclosed device. The disclosed device realizes the functions specified in one or more processes in the flowchart and/or one or more blocks in the block diagram.

These computer program instructions may also be loaded in the computer or other programmable data processing devices, such that the computer or other programmable data processing devices execute a series of operational steps to realize computer-implemented processing. Accordingly, instructions executed in the computer or other programmable devices provide steps for implementing functions specified in one or more processes in the flowchart and/or one or more blocks in the block diagram.

Apparently, those skilled in the relevant art may perform various modifications or variations on embodiments of the present disclosure without departing from the spirit and scope of the present disclosure. Thus, if these modifications and variations of the present disclosure fall within the scope defined by the appended claims and their equivalent technologies, the present disclosure is intended to cover these modifications and variations.

## Claims

1. A method for building images, comprising:
acquiring a template file to which an application type of a target application corresponds, wherein the template file includes platform environment configuration information and at least one variable;
acquiring to-be-input parameters to which the at least one variable corresponds and to which the target application matches; and
based on the platform environment configuration information, the at least one variable, and the to-be-input parameters to which the at least one variable corresponds and to which the target application matches, executing an image-building command to obtain an image for running the target application.

2. The method according to claim 1, wherein the based on the platform environment configuration information, the at least one variable, and the to-be-input parameters to which the at least one variable corresponds and to which the target application matches, executing the image-building command to obtain the image for running the target application, includes:
based on the template file to which the application type of the target application corresponds, determining a target location of each variable in the template file;
filling the to-be-input parameters to which the at least one variable corresponds and to which the target application matches in corresponding target locations, and generating an image-building script based on the filled template file; and
executing an image-building command based on the image-building script, thereby obtaining the image for running the target application.

3. The method according to claim 2, wherein acquiring the to-be-input parameters to which the at least one variable corresponds and to which the target application matches, includes:
displaying the at least one variable on a Web page or in an attribute file of the target application; and
if data input is detected on the Web page or in the attribute file of the target application, acquiring at least one key-value pair formed by each variable and input data corresponding to the each variable, wherein in each key-value pair, a keyword is a variable, and a value is a to-be-input parameter to which the variable corresponds and to which the target application matches.

4. The method according to claim 3, wherein the template file further includes a preset structural body to which the at least one variable corresponds, and before filling the to-be-input parameters to which the at least one variable corresponds and to which the target application matches in corresponding target locations, the method further includes:
parsing the acquired at least one key-value pair into a to-be-matched structural body, wherein the to-be-matched structural body has a consistent format as the preset structural body.

5. The method according to claim 4, wherein determining the target location of each variable in the template file; filling the to-be-input parameters to which the at least one variable corresponds and to which the target application matches in corresponding target locations, and generating the image-building script based on the filled template file, includes:
matching each variable in the to-be-matched structural body with each variable in the preset structural body;
if a variable in the to-be-matched structural body is determined to be consistent with a variable in the preset structural body:
determining a location to which the variable in the preset structural body corresponds as the target location, and
deleting the variable in the target location, and filling the to-be-input parameter to which the variable in the to-be-matched structural body corresponds and to which the target application matches in the target location, thereby obtaining the image-building script.

6. The method according to any one of claims 1-5, wherein before, based on the platform environment configuration information, the at least one variable, and the to-be-input parameters to which the at least one variable corresponds and to which the target application matches, executing the image-building command to obtain the image for running the target application, the method further includes:
determining a name of the image for running the target application based on the to-be-input parameters to which the target application matches.

7. A device for building images, comprising:
a memory, configured to store program instructions for performing a method for building images; and
a processor, coupled with the memory and, when executing the program instructions, configured for:
acquiring a template file to which an application type of a target application corresponds, and acquiring to-be-input parameters to which the at least one variable corresponds and to which the target application matches, wherein the template file includes platform environment configuration information and at least one variable; and
based on the platform environment configuration information, the at least one variable, and the to-be-input parameters to which the at least one variable corresponds and to which the target application matches, executing an image-building command to obtain an image for running the target application.

8. The device according to claim 7, wherein the processor is further configured for:
based on the template file to which the application type of the target application corresponds, determining a target location of each variable in the template file;
filling the to-be-input parameters to which the at least one variable corresponds and to which the target application matches in corresponding target locations, and generating an image-building script based on the filled template file; and
executing an image-building command based on the image-building script, thereby obtaining the image for running the target application.

9. The device according to claim 8, wherein the processor is further configured for:
displaying the at least one variable on a Web page, or in an attribute file of the target application;
if data input is detected on the Web page or in the attribute file of the target application, acquiring at least one key-value pair formed by each variable and input data corresponding to the each variable, wherein in each key-value pair, the keyword is a variable, and the value is a to-be-input parameter to which the variable corresponds and to which the target application matches.

10. The device according to claim 9, wherein the template file further includes a preset structural body to which the at least one variable corresponds, and the processor is further configured for:
parsing the acquired at least one key-value pair into a to-be-matched structural body, wherein the to-be-matched structural body has a consistent format as the preset structural body.

11. The device according to claim 10, wherein the processor is further configured for:
matching each variable in the to-be-matched structural body with each variable in the preset structural body;
if a variable in the to-be-matched structural body is determined to be consistent with a variable in the preset structural body:
determining a location to which the variable in the preset structural body corresponds as the target location, and
deleting the variable in the target location, and filling the to-be-input parameter to which the variable in the to-be-matched structural body corresponds and to which the target application matches in the target location, thereby obtaining the image-building script.

12. The device according to any one of claims 7-11, wherein the processor is further configured for:
determining a name of the image for running the target application based on the to-be-input parameters to which the target application matches.
